# DEMANDE DE BREVET EUROPEEN

(11) **EP 0 886 171 A1**
(43) Date de publication de la demande: **23.12.1998**
(21) Numéro de dépôt: 98201957.2
(22) Date de dépôt: 11.06.1998
(51) Int. Cl.: G02F 1/1335, G02F 1/1333

(54) **Dispositif d'affichage à cristaux liquides et appareil électronique comportant un tel dispositif.**

(30) Priorité: 20.06.1997 FR 9707724
(71) Demandeur: Koninklijke Philips Electronics N.V., 5621 BA Eindhoven (NL)
(72) Inventeur: Prigent, Georges, 75008 Paris (FR)
(74) Mandataire: den Braber, Gerard Paul

(57) **Abrégé**

L'invention concerne un écran d'affichage à cristaux liquides comportant successivement un premier polariseur 26, une première couche de verre 22, un cristal liquide 21, une deuxième couche de verre 23, un deuxième polariseur 27, un réflecteur purement réflectif 29, une source de lumière 30, un film réflecteur 32 entourant la tranche de la deuxième couche de verre 23 tout en préservant au moins une ouverture pour permettre le passage de la lumière émise par la source 30 à travers la couche de verre 23.

Un tel agencement fournit un écran à cristaux liquides muni d'un éclairement efficace et uniforme sans l'aide d'un guide lumière, ce qui le rend plus léger et plus plat que les écrans classiques.

Applications : écrans à cristaux liquides.

## Description

L'invention concerne un dispositif de visualisation comportant :
- une matière ferro-électrique du type cristal liquide prise en sandwich entre une première et une deuxième couche d'un matériau qui laisse passer la lumière,
- et au moins une source de lumière placée sur le coté du dispositif de façon à l'éclairer.

L'invention concerne également un appareil électronique muni d'un tel dispositif.

Elle s'applique à tous les appareils dotés d'un écran d'affichage du type LCD (de l'anglais Liquid Cristal Display) et en particulier aux radiotéléphones et autres équipements portatifs à écrans.

Un dispositif du genre mentionné dans le préambule est connu du document de brevet numéro 1 417 958. Il comporte de plus un guide lumière dont une surface est texturée. Le guide est placé entre un polariseur et un réflecteur. Il est éclairé sur le côté par la source de lumière de manière à ce que la réflexion du faiseau lumineux sur la surface texturée produise un éclairement homogène de l'écran.

Un objet de l'invention est de prévoir un écran de visualisation comportant un système d'éclairage efficace, ne nécessitant pas la presence d'un guide lumière pour diminuer le poids et l'épaisseur de l'écran.

Pour cela, un dispositif du genre déjà mentionné est remarquable en ce que la tranche de l'une des couches de matériau laissant passer la lumière est recouverte d'un film réflecteur préservant au moins une ouverture pour permettre le passage de la lumière émise par ladite source.

La description suivante, faite en regard des dessins ci-annexés, le tout donné à titre d'exemple non limitatif fera bien comprendre comment l'invention peut être réalisée.

La figure 1 représente un appareil électronique selon l'invention.

La figure 2 représente une vue en coupe d'un dispositif de visualisation selon l'art antérieur.

La figure 3 représente :
- en A, une vue en coupe du dispositif de visualisation de l'appareil de la figure 1,
- en B, une vue selon un autre plan de coupe du dispositif montré en A.

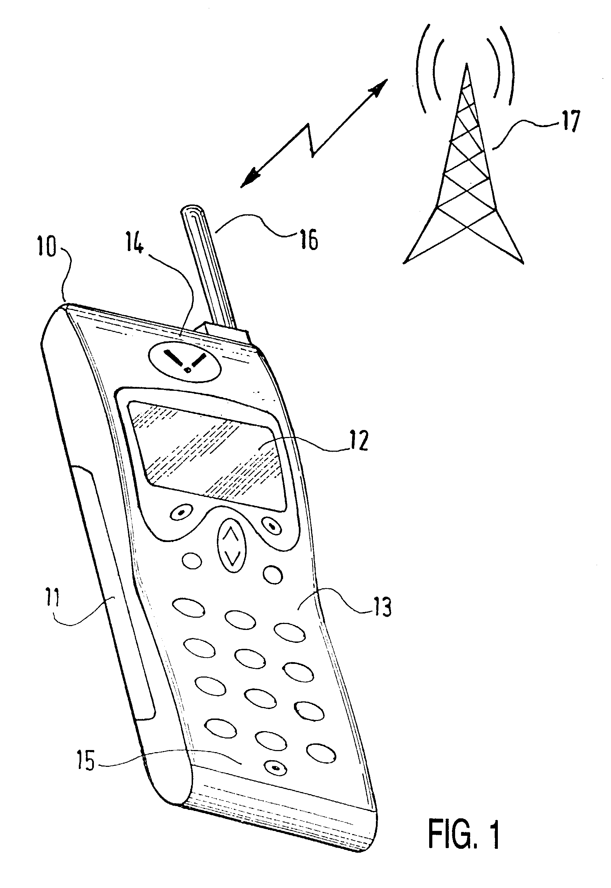

L'appareil représenté à la figure 1 est un radiotéléphone, mais l'invention peut être appliquée à tout autre appareil électronique muni d'un dispositif de visualisation du type écran d'affichage à cristaux liquides.

Le radiotéléphone représenté à la figure 1 comporte un boîtier 10, une batterie d'alimentation 11 et des circuits électroniques (non représentés) intégrés sur une carte couramment appelée PCB située à l'intérieur du boîtier 10. Un écran à cristaux liquides 12, un clavier 13, un haut-parleur 14 et un microphone 15 assurent l'interface avec l'utilisateur. Un circuit d'émission/réception également intégré sur la carte PCB coopère avec une antenne 16 pour échanger des signaux radioélectriques avec un site de base 17.

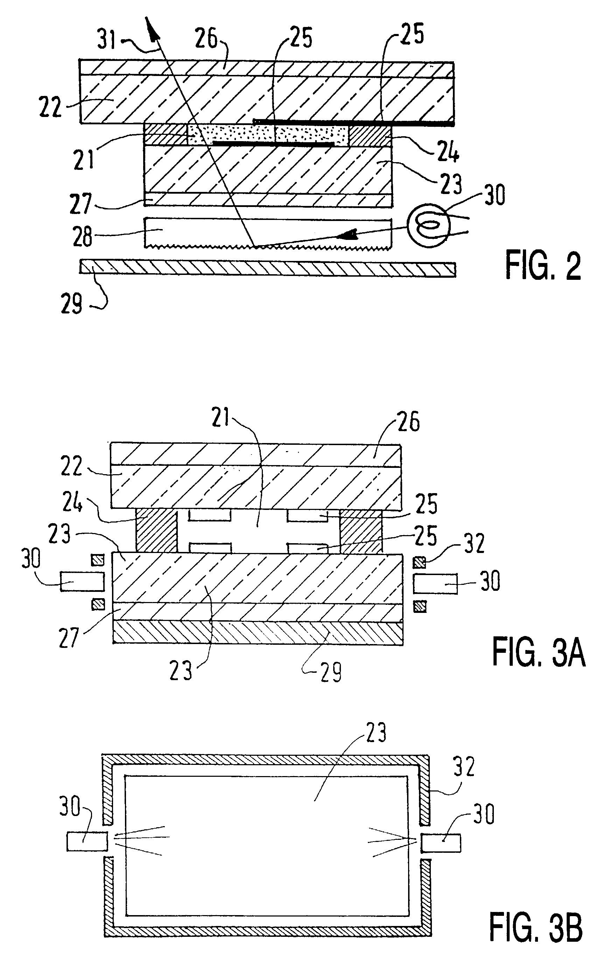

Une coupe transversale d'un écran à cristaux liquides 12 est illustré à la figure 2. Il est constitué d'un cristal liquide 21 ayant des propriétés optiques, pris en sandwich entre deux couches de verre transparent 22 et 23 scellées par un agent de liaison 24 pour éviter toute fuite du cristal liquide 21. L'activité optique du cristal se manifeste par une rotation de 90 ° du plan de polarisation d'une lumière polarisée incidente. Des films conducteurs 25 sont prévus sur les surfaces opposées des couches de verre 22 et 23 pour être en contact avec le cristal liquide 21. L'ensemble précédemment décrit est à son tour pris en sandwich entre un polariseur inférieur 26 et un polariseur supérieur 27 dont les plans de polarisation font un angle droit. Un guide lumière 28 et un réflecteur 29 sont placés derrière le polariseur inférieur. Le guide lumière 28 peut être réalisé en matériau translucide, par exemple en verre dépoli. Une source de lumière 30, par exemple ponctuelle, est placée sur le côté de l'ensemble, à proximité du guide lumière 28 pour éclairer celui-ci directement par la tranche.

Lorsque la source est placée par exemple contre la tranche du guide lumière 28, le rayon lumineux émis 31 se propage dans tout le guide 28 par un phénomène de diffusion dû à sa surface texturée et est ensuite réfléchi par le réflecteur 29 pour éclairer tout l'écran.

La présente invention propose de fournir un dispositif plus léger et moins épais que celui précédemment décrit. Pour cela, on a supprimé le guide lumière 28 comme le montre la figure 3.

Une coupe transversale de l'écran à cristaux liquides représenté sur la figure 1 est illustré en A à la figure 3. Les références des élements identiques à ceux de la figure 2 sont conservés. Un film réflecteur 32 est ajouté sur le pourtour latéral de la couche de verre inférieure 23. Des ouvertures dans le film sont préservées pour permettre le passage de la lumière émise par la source 30. On utilise de préférence des diodes électroluminescentes, disposées contre la tranche de la couche de verre inférieure 23 de façon à émettre un maximum de lumière à l'intérieur de la couche. Plus les diodes sont proches de la couche de verre, moins la lumière est réfléchie sur sa tranche. On peut éventuellement utiliser des résines spéciales pour guider la lumière de la diode vers la couche de verre et ainsi éviter les réflexions sur la tranche.

Une vue de dessus de l'ensemble couche de verre inférieure 23, film réflecteur 32 et source de lumière 30 est représentée en B à la figure 3.

Ainsi, a-t-on décrit un dispositif de visualisation particulièrement léger et de faible épaisseur ainsi qu'un appareil électronique comportant un tel dispositif. Bien entendu, l'invention n'est pas limitée aux modes de réalisation qui viennent d'être décrits et représentés. D'autres variantes de réalisation apparaîtront à l'homme ou la femme de l'art, ces variantes ne sortant pas du cadre de l'invention.

## Revendications

1. **Dispositif de visualisation** comportant :
- une matière ferro-électrique du type cristal liquide prise en sandwich entre une première et une deuxième couche d'un matériau qui laisse passer la lumière,
- au moins une source de lumière placée sur le coté du dispositif de façon à l'éclairer,
**caractérisé en ce que** la tranche de l'une desdites couches est recouverte d'un film réflecteur préservant au moins une ouverture pour permettre le passage de la lumière émise par ladite source.

2. Dispositif de visualisation selon la revendication 1, caractérisé en ce que ledit matériau laissant passer la lumière est du verre transparent.

3. Dispositif de visualisation selon la revendication 2, caractérisé en ce que la source de lumière est une diode electroluminescente.

4. **Dispositif de visualisation** selon l'une des revendications 1 à 3, comportant successivement :
- un premier polariseur,
- ladite première couche,
- ladite matière ferro-électrique,
- ladite deuxième couche,
- un deuxième polariseur,
- un réflecteur inférieur,
**caractérisé en ce que** la couche dont la tranche est recouverte d'un film réflecteur est ladite deuxième couche,
**et en ce que** la source de lumière est placée à proximité de cette deuxième couche.

5. Appareil électronique comportant un dispositif de visualisation selon l'une des revendications 1 à 4.
